# FASCICULE DE BREVET EUROPEEN

(11) **EP 0 978 808 B1**
(45) Date de publication et mention de la délivrance du brevet: **06.08.2003**
(21) Numéro de dépôt: 99120992.5
(22) Date de dépôt: 21.01.1997
(51) Int. Cl.: G07F 7/08, G06F 17/60, G07G 1/00

(54) **Procédé et dispositif de traîtement d'informations codées avec carte à puce**
Verfahren und Vorrichtung zur Verarbeitung von kodierten Daten mit einer Chipkarte
Method and device for the processing of coded data with an integrated circuit card

(30) Priorité: 22.01.1996 FR 9600678
(43) Date de publication de la demande: 09.02.2000
(62) Demande divisionnaire de: 97400130.7
(73) Titulaire: WELCOME REAL TIME, 13856 Aix en Provence Cedex 3 (FR)
(72) Inventeur: Haddad, Aneace, 83460 Les-Arcs-sur-Argens (FR); Chevalier, Bernard, Antinéa D, 13800 Marseille (FR)
(74) Mandataire: Benech, Frédéric

(56) Documents cités:
- EP-A- 0 214 653
- WO-A-95/03570
- WO-A-95/21428
- GB-A- 2 274 349
- US-A- 5 380 991

## Description

La présente invention concerne un procédé de traitement d'informations codées, lors d'une opération d'achat ou de paiement par un client titulaire d'une carte à puce chez un commerçant, dans lequel on lit le contenu de la mémoire de la carte à puce et on imprime ou non un coupon à partir des informations issues du contenu de ladite mémoire.

Elle concerne également un dispositif mettant en oeuvre un tel procédé.

La présente invention trouve une application particulièrement importante, bien que non exclusive, dans le domaine du traitement des cartes de fidélité, présentées au moment du paiement par les clients chez un commerçant, par exemple dans un magasin de détail du type hypermarché ou supermarché, à une station service, ou chez un concessionnaire vendeur de voitures.

Ainsi, avec l'invention, il est possible de moduler une offre commerciale en fonction du comportement a posteriori du titulaire de la carte, ce qui permet de lui accorder des avantages spécifiques de façon personnalisée et immédiate, qui peuvent de plus être enregistrés sur la carte.

On connaît déjà un procédé qui permet d'accorder des avantages spécifiques en fonction de l'attitude comportementale des clients, et qui consiste essentiellement à envoyer un coupon de réduction par la poste, quelque temps après l'opération déclencheuse d'achat ou de paiement par le titulaire.

Un tel procédé présente des inconvénients. Il génère en effet des délais importants et présente une fiabilité limitée (perte de coupons, changement d'adresse.

Le document "Banking Technology" (Février 1995) décrit dans l'article "Smart times a head" pp. 22-25 des cartes électroniques pouvant retenir des informations sur les hatitudes d'achats des clients. Un type de carte peut aussi conserver des points en memoire.

Un des problèmes techniques résolu par l'invention consiste à éliminer ces délais importants, en accordant un avantage au client au moment même du paiement par ce dernier ou de façon plus générale de l'opération déclenchant l'avantage.

Selon l'invention, le commerçant va ainsi pouvoir reconnaître un client en fonction de la fréquence de ses passages et du volume de ses dépenses. Il pourra alors lui accorder automatiquement un avantage spécifique déterminé, et ce de façon instantanée.

Dans ce but l'invention propose notamment un procédé de traitement d'informations codées, lors d'une opération d'achat ou de paiement par un client titulaire d'une carte à puce chez un commerçant, dans lequel on lit le contenu de la mémoire de la carte à puce et on imprime ou non un coupon à partir des informations issues du contenu de ladite mémoire,
caractérisé en ce que, la mémoire de la carte à puce comportant
un premier fichier d'identification, dit fichier Membre, identifiant le client porteur de la carte,
un deuxième fichier de comptabilisation, dit fichier Points,
et un troisième fichier, dit fichier Comportement, concernant le comportement du titulaire de la carte chez chacun des commerçants concernés, ledit fichier Comportement comprenant pour chaque commerçant concerné, un champ d'identification dudit commerçant concerné et plusieurs champs de comportement de l'utilisateur auprès dudit commerçant concerné,
on effectue en fonction du commerçant concerné, un traitement algorithmique déterminé lors de l'opération chez ledit commerçant concerné en fonction d'une part de la date de l'opération et d'autre part des informations contenues dans un ou plusieurs des champs de comportement dudit commerçant concerné et/ou d'un autre commerçant,
puis on écrit des données dans le fichier Points et dans le fichier Comportement, et on imprime ou non ledit coupon, à partir du résultat dudit traitement algorithmique.

Dans des modes de réalisation avantageux, on a de plus recours à l'une et/ou à l'autre des dispositions suivantes :
- le traitement algorithmique comporte une étape d'incrémentation ou de décrémentation du fichier Point d'un nombre de points prédéterminés ;
- on n'imprime le coupon que si le nombre de points contenu dans le fichier Points est supérieur à une valeur déterminée ;
- on n'imprime le coupon et/ou on n'incrémente ou décrémente le fichier Points que si le fichier Membre correspond à des critères déterminés ;
- on incrémente plus ou moins le fichier Points en fonction du montant de l'opération d'achat ou de paiement ;
- on incrémente plus ou moins le fichier Points en fonction de la fréquence et/ou du caractère de première, deuxième ou xième visite du titulaire de la carte sur une période de temps de durée déterminée ;
- on introduit des informations correspondant à l'opération dans une mémoire d'un terminal de paiement situé chez ledit commerçant,
   on compare lesdites informations introduites avec des informations stockées dans des moyens de stockage et concernant des séries d'opérations prédéterminés, et
   on traite les résultats de ces comparaisons pour imprimer un coupon et/ou écrire dans le fichier Points ;
   Il est ainsi possible de réaliser des opérations promotionnelles limitées dans le temps et sur un ensemble de commerçants appartenant à un même réseau.
- on chiffre l'accès aux fichiers par une procédure d'encryptage dite du triple DES (Data Encryption Standard).

L'invention propose également un dispositif de traitement d'informations codées, lors d'une opération d'achat ou de paiement par un utilisateur titulaire d'une carte à puce, comprenant ladite carte, des moyens de lecture de données codées dans la mémoire de la carte à puce, des moyens de calcul et des moyens d'impression d'un coupon,
caractérisé
en ce que, la mémoire de la carte à puce comportant un premier fichier d'identification, dit fichier Membre, identifiant le client titulaire de la carte, un deuxième fichier de comptabilisation, dit fichier Points, et un troisième fichier, dit fichier Comportement, concernant le comportement du titulaire de la carte chez chacun des commerçants concernés, ledit fichier Comportement comprenant pour chaque commerçant concerné, un champ d'identification dudit commerçant concerné et plusieurs champs de comportement de l'utilisateur auprès dudit commerçant concerné,
dispositif dans lequel les moyens de calcul comportent des moyens de traitement algorithmique déterminé lors de l'opération chez ledit commerçant concerné en fonction d'une part de la date de l'opération et d'autre part des informations contenues dans un ou plusieurs des champs de comportement dudit commerçant concerné et/ou d'autres commerçants, et des moyens d'écriture des données dans le fichier Points, et dans le fichier Comportement à partir du résultat dudit traitement algorithmique les moyens d'impressions d'un coupon étant agencés pour imprimer ou non ledit coupon à partir des informations issues du contenu desdits fichiers et dudit traitement algorithmique.

Avantageusement, le dispositif comporte de plus :
- des moyens d'introduction de données correspondant à ladite opération dans une mémoire intermédiaire et d'affichage de données,
- des moyens de stockage d'informations codées concernant une ou plusieurs opérations,
- des moyens de comparaison entre les données introduites dans ladite mémoire intermédiaire et des informations stockées dans lesdits moyens de stockage d'informations,
- des moyens de traitement des résultats de ces comparaisons,
- et des moyens agencés pour imprimer ou non automatiquement le coupon à partir des informations issues du contenu de la mémoire de la carte à puce, commandés par lesdits moyens de traitement desdits résultats.

L'invention sera mieux comprise à la lecture de la description qui suit d'un mode particulier de réalisation donné à titre d'exemple non limitatif.

La description se réfère aux dessins qui l'accompagnent dans lesquels :
- la figure 1 montre un schéma général d'un dispositif selon un mode de réalisation de l'invention.
- la figure 2 est un schéma bloc, partiel, d'un mode de réalisation de la mémoire de la carte à puce dans le dispositif selon l'invention.
- la figure 3 est un schéma bloc diagramme du procédé de traitement des informations selon le mode de réalisation de l'invention plus particulièrement décrit ici.

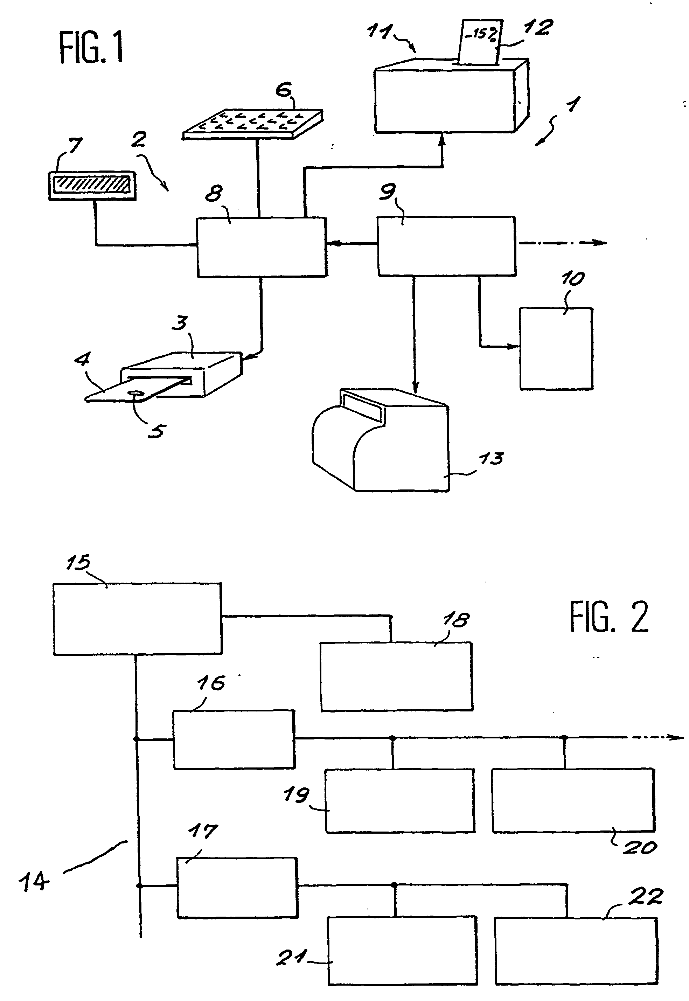

La figure 1 montre un dispositif 1 comprenant un terminal 2 de paiement muni d'un lecteur 3 de carte 4 à puce 5.

Le terminal de paiement est par exemple du type commercialisé sous la référence Delta 15 de la société française Schlumberger.

Les cartes à puce utilisables avec l'invention sont par exemple des cartes vendues sous. les références MP-COS de la société française Gemplus ou ME 2000 de la société française Schlumberger.

Elles peuvent être bancaires, privatives de crédit ou des cartes de fidélité.

Le terminal 2 comprend un clavier 6, un écran d'affichage 7 et un calculateur 8 programmable en fonction d'algorithmes déterminés de façon connue en elle-même.

Le calculateur 8 est relié au lecteur 3 via un circuit de lecture/écriture et à un micro-ordinateur 9 lui-même relié à une mémoire de masse 10.

Le dispositif 1 comprend également des moyens d'impression 11 d'un coupon 12 relié au calculateur 8 et à une caisse 13 enregistreuse et imprimante de factures, par exemple via un ordinateur 9.

Le calculateur 8 est relié, éventuellement via l'ordinateur 9, à des moyens (non représentés) entièrement à distance du site où est implanté le dispositif 1 et agencés pour assurer la cohérence des traitements et/ou des informations traitées et collectées par différents dispositifs sur différents sites.

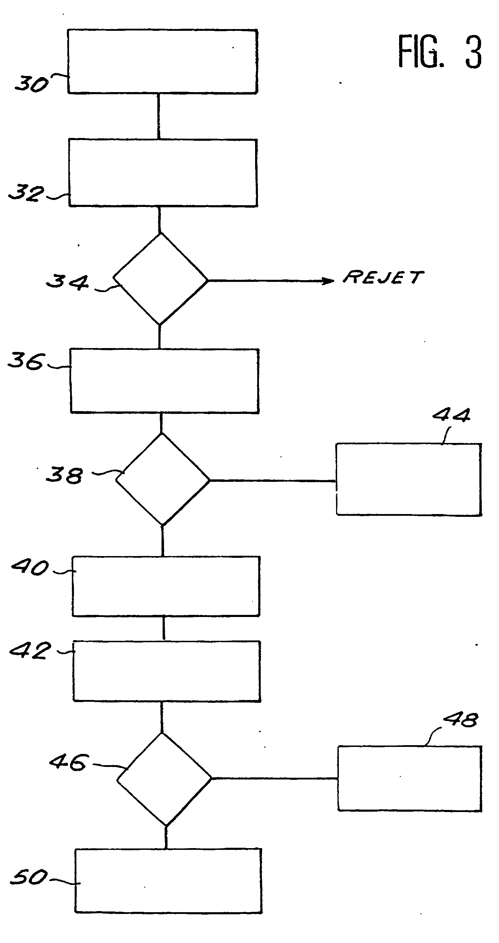

On a représenté sur la figure 2 l'organisation d'un mode de réalisation de la mémoire 14 de la puce 5 de la carte 4.

La carte comprend plusieurs applications, la mémoire 14 comprenant un répertoire principal ou racine 15.

Elle est organisée en répertoires 16, 17, etc.

Les informations concernant le titulaire ou porteur de la carte sont contenues dans un fichier 18 dit fichier Membre, sous le répertoire principal 15.

Il est prévu un répertoire Système 16 comprenant par exemple un ficher 19 concernant la carte elle-même et d'autres types de fichiers 20 connus en eux-mêmes.

Selon le mode de réalisation de l'invention plus particulièrement décrit ici, la mémoire 14 comprend un répertoire 17 dit "Répertoire Couponing" qui comprend le fichier Comportement 21 et le fichier Points 22.

Des modes de réalisation du fichier Membre 18, du fichier Comportement 21 et du fichier Points 22 selon l'invention sont décrits ci-après à titre d'exemple.

### Fichier Membre 18

- Code lecture :: Libre
- Code mise à jour :: RCode01

| **Champ** | **Format** | **Largeur** |
|---|---|---|
| Numéro de la carte | 999999999 | 9 |
| Type | Alpha | 2 |
| Version | 99 | 2 |
| Applications présentes | O / N | 9 |
| Mois/année de personnalisation (fabrication) | aamm | 4 |
| Mois/année de 1ère utilisation | aamm | 4 |
| Mois/année de péremption | aamm | 4 |
| Réservé | Alpha | 46 |

### Fichier Comportement 21

- Code lecture :: Libre
- Code mise à jour :: RCodel2

| **Champ** | **Format** | **Largeur** |
|---|---|---|
| Nombre de commerçants maxi | 99 | 2 |
| Nombre de commerçants enregistrés | 99 | 2 |
| Réservé | Alpha | 16 |
| Commerçants (jusqu'au nb commerçants enreg.) : | | |
| Code commerçant | 99999 | 5 |
| Code activité | Alpha | 1 |
| Date première visite | aammjj | 6 |
| Date dernière visite | aammjj | 6 |
| Nombre visites ce mois | 99 | 2 |
| Dépenses ce mois | 99999 | 5 |
| Nombre visites cette année | 999 | 3 |
| Dépenses cette année | 999999 | 6 |
| Nombre visites total | 999 | 3 |
| Dépenses total | 999999 | 6 |

### Fichier Points 22 (Compteur de points)

| | |
|---|---|
| Clé lecture solde | Libre |
| Clé débit | RKdebl |
| Clé crédit | Rkcredl |
| PIN (pour accès au débit) | Rcodel3 |

Dans un mode de réalisation avantageux il est prévu une gestion de la sécurité des informations sur la carte par cryptage des codes en fonction des numéros de cartes.

L'application comprend par exemple deux codes d'accès aux fichiers et deux clés d'accès au fichier Points. Les codes mères ou les clés mères sont intégrés dans le terminal 2.

Ils sont utilisés pour calculer des codes et des clés diversifiés, qui seront ensuite comparés aux codes et clés inscrits sur la carte. Chaque carte comprend son propre jeu unique de codes et clés.

Cette diversification se fait par la procédure du triple DES (Data Encryption Standard), appliquée à la fois sur les codes mères (ou les clés mères) et le numéro de la carte.

Les codes mères et clés mères intégrés dans le terminal sont par exemple :
- Code01: Code mère de mise à jour du fichier Membre
- Codel2: Code mère de mise à jour du fichier Comportement
- Kauthl: Clé mère d'authentification du fichier Points
- Kcredl: Clé mère de crédit du fichier Points

Les codes mères ou les clés mères sont par ailleurs et par exemple diversifiés de la manière suivante :
1. Les codes mères ou les clés mères (16 octets) sont partagés en deux parties égales de 8 octets KL (partie gauche) et KR (partie droite)
2. N (les 8 premiers octets du n° carte) est chiffré par KL : R1 = DES(KL,N)
3. R1 sur 8 octets est déchiffré par KR : R2 = DES-1(KR,R1)
4. R2 sur 8 octets est chiffré par KL : R = DES(KL,R2)
R est le résultat sur 8 octets de la diversification par triple DES d'un code ou d'une clé mère, et représente donc la valeur inscrite sur la carte.

On va maintenant décrire un exemple de fonctionnement du dispositif de la figure 1 en référence à la figure 3.

L'utilisateur client, titulaire de la carte, introduit la carte 4 dans le lecteur 3 (étape 30), les fichiers Membre, Comportement et Points sont alors lus (étape 32).

Une étape test 34 sur la validité de la carte (date de péremption) est alors effectuée par comparaison avec la date du jour.

Puis le montant de l'achat est introduit (étape 36) soit via la caisse 13 et le micro-ordinateur 9, soit via le clavier 6.

Si la somme est supérieure à une valeur déterminée (test 38), on effectue alors un traitement algorithmique 40 en fonction des informations contenues dans le fichier Membre, le fichier Comportement et le fichier Points.

L'opération débouche sur une étape 42 d'incrémentation du fichier Points d'un nombre de points déterminés par exemple en fonction du nombre d'opérations effectuées par le titulaire de la carte dans le mois.

Sinon (étape 44), l'écran 7 affiche par exemple un message "pas de réduction".

Une étape test 46 est ensuite prévue comparant le nombre de points du fichier Points à un volume seuil déterminé.

Si le nombre de points est inférieur à cette valeur, on émet un message en 48. Si il est supérieur, on imprime (étape 50) un coupon de réduction d'un montant déterminé.

L'invention permet ainsi au titulaire de la carte d'obtenir deux types d'avantage séparément ou simultanément :
- un crédit de points sur un compteur de points électronique dans la puce de la carte,
- un bon de réduction imprimé au moment de l'achat, à valoir sur l'achat même ou sur un prochain achat.

On donne ci-après plusieurs exemples de fonctionnement.

Le commerçant peut choisir, par exemple, de donner 2 points à son clients lors de sa première visite du mois, 4 points à la deuxième visite et 6 points à la troisième visite de chaque mois.

Un autre commerçant peut choisir de lier le crédit de points à un montant de transaction. Ainsi, à sa première visite, le client recevra, par exemple, un nombre de point égal à 10 % de son achat. Pour toute visite suivante, le crédit de points sera de 5 %.

Un autre commerçant choisira d'offrir un bon de réduction, à valoir sur un achat chez lui. Par exemple, le commerçant peut accorder 25 % de réduction à ses clients qui viennent pour la première fois, et 10 % aux autres.

Le bon de réduction peut avoir une valeur en points. Dans ce cas, le bon est donné au client contre un débit de points. Par exemple, le commerçant propose un bon de 25 % de réduction, contre un montant de 10 points - le bon ne sera imprimé que si la carte dispose d'un minimum de 10 points.

L'invention permet également de cibler des cartes précises. Le commerçant identifie préalablement les numéros de cartes dans le fichier Membre, qui recevront un avantage lors de leurs prochaines visites.

Cette liste de cartes peut également être téléchargée par un système central via la liaison externe décrite en référence à la figure 1.

Un avantage de l'invention est de pouvoir formuler des offres en fonction du comportement client chez d'autres commerçants, chaque commerçant appartenant à un "groupe d'activité", identifié par un champ présent dans le fichier Comportement décrit ci-avant.

Cet aspect de l'invention peut ainsi être utilisé pour identifier les clients qui dépensent peu chez le commerçant, mais beaucoup dans un secteur d'activité proche de celui du commerçant. Les clients ainsi identifiés peuvent donc se voir proposer des avantages plus forts.

On a donné ci-après un exemple de paramétrage de l'algorithme d'émission d'avantages selon l'invention.

### Paramètrage de l'algorithme

| **Catégorie** | **Paramètre** | **Nature** | **Description** |
|---|---|---|---|
| Paramètres généraux | Achat minimum | Montant en centimes | Seuil en dessous duquel l'opération est trop petite pour être considérée une visite |
| | Une visite par jour ? | Oui | Seule la première opération dans un même jour sera considérée comme une visite |
| | | Non | N opérations dans un même jour = N visites |
| | Fonction multi-visite | Non activée | Appliquer les paramètres de "Visite 1" pour toute visite. Ne pas mettre à jour le fichier Comportement dans la carte |
| | | même Mois | Distinguer entre 1ère, 2ème et 3ème visite dans un même mois |
| | | même Année | ... dans une même année |
| | | depuis | ...depuis la création de la carte |
| | | Création | |
| | | Carte | |
| | Bonus seuil | Montant | Seuil pour l'émission de points bonus |
| | Bonus points | 999 | Montant des points bonus |
| Paramètres visite 1 | Calcul points | Non activée | Pas de crédit ou débit de points lors de la première visite |
| | | Crédit | |
| | | Débit | |
| | Calcul Points | Fixe | Le champ "Valeur Points" est une somme fixe de points |
| | | Pourcentage | Le champ "Valeur Points" est un pourcentage du montant de l'opération |
| | Valeur Points | 999 | Valeur en points (jusqu'à 999), ou en pourcentage (jusqu'à 99,9%) |
| | Texte coupon | Non activée | Aucun message supplémentaire à imprimer sur le ticket |
| | | ASCII 2 x 20 | Impression 2 lignes de 20 caractères, en plus des infos concernant l'ancien solde, les points acquis, et le nouveau solde |
| Paramètres visite 2 | Fonction Points | cf Visite 1 | |
| | Calcul Points | | |
| | Valeur Points | | |
| | Texte coupon | | |
| Paramètres visite 3 | Fonction Points | cf Visite 1 | |
| | Calcul Points | | |
| | Valeur Points | | |
| | Texte coupon | | |
| Paramètres visites 4 et + | Fonction Points | cf Visite 1 | |
| | Calcul Points | | |
| | Valeur Points | | |
| | Texte coupon | | |

Comme il va de soi, et comme il résulte de ce qui précède, la présente invention ne se limite pas au mode de réalisation de l'invention plus particulièrement décrit ici. Elle en embrasse au contraire toutes les variantes et notamment celles où le traitement algorithmique est programmable à distance.

## Revendications

1. Procédé de traitement d'informations codées, lors d'une opération d'achat ou de paiement par un client titulaire d'une carte à puce chez un commerçant, dans lequel on lit le contenu de la mémoire de la carte à puce et on imprime ou non un coupon à partir des informations issues du contenu de ladite mémoire,
**caractérisé en ce que**, la mémoire de la carte à puce comportant
un premier fichier d'identification, dit fichier Membre, identifiant le client porteur de la carte,
un deuxième fichier de comptabilisation, dit fichier Points,
et un troisième fichier, dit fichier Comportement, concernant le comportement du titulaire de la carte chez chacun des commerçants concernés, ledit fichier Comportement comprenant pour chaque commerçant concerné, un champ d'identification dudit commerçant concerné et plusieurs champs de comportement de l'utilisateur auprès dudit commerçant concerné,
on effectue en fonction du commerçant concerné, un traitement algorithmique déterminé lors de l'opération chez ledit commerçant concerné en fonction d'une part de la date de l'opération et d'autre part des informations contenues dans un ou plusieurs des champs de comportement dudit commerçant concerné et/ou d'un autre commerçant, puis on écrit des données dans le fichier Points et dans le fichier Comportement, et on imprime ou non ledit coupon, à partir du résultat dudit traitement algorithmique.

2. Procédé selon la revendication 1, **caractérisé en ce que**, les champs de comportement de chaque commerçant concerné comprenant de plus un registre dit « code activité », identifiant un secteur d'activité, on réalise le traitement algorithmique spécifique dans le fichier Points lors de l'achat chez un commerçant concerné, en fonction du contenu des champs de comportement de l'utilisateur de la carte chez un autre ou plusieurs autres commerçants concernés ayant le même « code activité ».

3. Procédé selon l'une quelconque des revendications précédentes, **caractérisé en ce que** le traitement algorithmique comporte une étape d'incrémentation ou de décrémentation du fichier Point d'un nombre de points déterminés.

4. Procédé selon la revendication 3, **caractérisé en ce qu'**on n'imprime un coupon que si le nombre de points contenu dans le fichier Points est supérieur à une valeur déterminée.

5. Procédé selon l'une quelconque des revendications 3 et 4, **caractérisé en ce qu'**on n'imprime le coupon et/ou on n'incrémente ou décrémente le fichier Points que si le fichier Membre correspond à des critère déterminés.

6. Procédé selon l'une quelconque des revendications 3 à 5, **caractérisé en ce qu'**on incrémente plus ou moins le fichier Points en fonction du montant de l'opération d'achat ou de paiement.

7. Procédé selon l'une quelconque des revendications 3 à 6, **caractérisé en ce qu'**on incrémente plus ou moins le fichier Points en fonction de la fréquence et/ou du caractère de première, deuxième ou xième visite du titulaire de la carte sur une période de temps de durée déterminée.

8. Procédé selon l'une quelconque des revendications précédentes, **caractérisé en ce que** on introduit des informations correspondant à l'opération dans une mémoire d'un terminal de paiement situé chez le commerçant concerné,
on compare lesdites informations introduites avec des informations stockées dans des moyens de stockage et concernant des séries d'opérations prédéterminés, et on traite les résultats de ces comparaisons pour imprimer un coupon et/ou écrire dans le fichier Points.

9. Procédé selon l'une quelconque des revendications précédentes, **caractérisé en ce qu'**on chiffre l'accès aux fichiers par la procédure dite du triple DES.

10. Procédé selon l'une quelconque des revendications précédentes, **caractérisé en ce que** on programme le traitement algorithmique à distance.

11. Dispositif de traitement d'informations codées, lors d'une opération d'achat ou de paiement par un utilisateur titulaire d'une carte à puce chez un commerçant, comprenant ladite carte à puce, des moyens de lecture de données codées dans la mémoire de la carte à puce, des moyens de calcul et des moyens d'impression d'un coupon, **caractérisé**
**en ce que**, la mémoire de la carte à puce comportant un premier fichier d'identification, dit fichier Membre, identifiant le client titulaire de la carte, un deuxième fichier de comptabilisation, dit fichier Points, et un troisième fichier, dit fichier Comportement, concernant le comportement du titulaire de la carte chez chacun des commerçants concernés, ledit fichier Comportement comprenant pour chaque commerçant concerné, un champ d'identification dudit commerçant concerné et plusieurs champs de comportement de l'utilisateur auprès dudit commerçant concerné,
dispositif dans lequel les ' moyens de calcul comportent des moyens de traitement algorithmique déterminé lors de l'opération chez ledit commerçant concerné en fonction d'une part de la date de l'opération et d'autre part des informations contenues dans un ou plusieurs des champs de comportement dudit commerçant concerné et/ou d'autres commerçants, et des moyens d'écriture des données dans le fichier Points, et dans le fichier Comportement à partir du résultat dudit traitement algorithmique,
les moyens d'impression d'un coupon étant agencés pour imprimer ou non ledit coupon à partir des informations issues du contenu desdits fichiers et dudit traitement algorithmique.

12. Dispositif selon la revendication 11, **caractérisé en ce que** les champs de comportement de chaque commerçant concerné comprenant de plus un champ dit « code activité », identifiant un secteur d'activité, les moyens de calcul sont agencés pour effectuer un traitement algorithmique spécifique dans le fichier Points lors de l'achat chez un commerçant concerné, en fonction du contenu des champs de comportement de l'utilisateur de la carte chez un autre ou plusieurs autres commerçants concernés ayant le même « code activité ».

13. Dispositif selon la revendication 12, **caractérisé en ce qu'**il comporte
- des moyens d'introduction de données correspondant à ladite opération dans des moyens de stockage intermédiaire et d'affichage de données,
- des moyens de stockage d'informations codées concernant une ou plusieurs opérations,
- des moyens de comparaison entre les données introduites dans ladite mémoire intermédiaire et des informations stockées dans lesdits moyens de stockage d'informations,
- des moyens de traitement des résultats de ces comparaisons,
- et des moyens agencés pour imprimer automatiquement un coupon, commandés par lesdits moyens de traitement desdits résultats et à partir des informations issues du contenu de la mémoire de ladite carte à puce.

14. Dispositif selon l'une quelconque des revendications 11 à 13 **caractérisé en ce que** les moyens de traitement algorithmiques sont programmables à distance

## Claims

1. Method for processing coded information, at the time of a purchase or payment operation by a customer holding a smart card at a merchant, in which the content of the memory of the smart card is read and a coupon is printed or not on the basis of information coming from the content of said memory,
**characterised in that**, the memory of the smart card comprising
a first identification file, known as a Member file, identifying the cardholding customer,
a second accounting file, known as a Points file,
and a third file, known as a Behaviour file, concerning the behaviour of the card holder at each of the merchants concerned, said Behaviour file comprising, for each merchant concerned, an identification field for said merchant concerned and several fields for the behaviour of the user at said merchant concerned,
depending on the merchant concerned, an algorithmic processing given at the time of the operation at said merchant concerned is carried out depending, on the one hand, on the date of the operation and, on the other hand, on the information contained in one or more of the behaviour fields for said merchant concerned and/or another merchant,
then data are written to the Points file and the Behaviour file, and said coupon is printed or not, on the basis of the result of said algorithmic processing.

2. Method according to Claim 1, **characterised in that**, since the behaviour fields for each merchant concerned also comprise a register known as a "business code", identifying a branch of industry, the specific algorithmic processing is carried out in the Points file at the time of the purchase from a merchant concerned, according to the content of the behaviour fields of the card user at another one or more other merchants concerned having the same "business code".

3. Method according to any one of the preceding claims, **characterised in that** the algorithmic processing comprises a step of incrementing or decrementing the Points file by a given number of points.

4. Method according to Claim 3, **characterised in that** a coupon is printed only if the number of points contained in the Points file is greater than a given value.

5. Method according to any one of Claims 3 and 4, **characterised in that** the coupon is printed and/or the Points file is incremented or decremented only if the Member file meets given criteria.

6. Method according to any one of Claims 3 to 5, **characterised in that** the Points file is incremented by more or less depending on the amount of the purchase or payment operation.

7. Method according to any one of Claims 3 to 6, **characterised in that** the Points file is incremented by more or less depending on the frequency and/or whether this is the first, second or xth visit by the card holder over a period of time of given duration.

8. Method according to any one of the preceding claims, **characterised in that**
information corresponding to the operation is entered in a memory of a payment terminal located at the merchant concerned,
said entered information is compared with information stored in storage means and relating to predetermined series of operations, and
the results of these comparisons are processed in order to print a coupon and/or to write to the Points file.

9. Method according to any one of the preceding claims, **characterised in that** access to the files is quantified by the procedure known as triple DES.

10. Method according to any one of the preceding claims, **characterised in that** the algorithmic processing is programmed remotely.

11. Device for processing coded data, at the time of a purchase or payment operation by a user holding a smart card with a merchant, comprising said smart card, means for reading data coded in the memory of the smart card, calculation means and means for printing a coupon, **characterised**
**in that**, since the memory of the smart card comprises a first identification file, known as a Member file, identifying the customer holding the card, a second accounting file, known as a Points file, and a third file, known as a Behaviour file, concerning the behaviour of the card holder at each of the merchants concerned, said Behaviour file comprising, for each merchant concerned, an identification field for said merchant concerned and several fields for the behaviour of the user at said merchant concerned,
in which device the calculation means comprise algorithmic processing means given at the time of the operation at said merchant concerned depending, on the one hand, on the date of the operation and, on the other hand, on the information contained in one or more of the behaviour fields for said merchant concerned and/or other merchants, and means for writing data to the Points file and to the Behaviour file on the basis of the result of said algorithmic processing,
means for printing a coupon being arranged in order to print said coupon or not on the basis of information coming from the content of said files and said algorithmic processing.

12. Device according to Claim 11, **characterised in that** since the behaviour fields for each merchant concerned also comprise a field known as "business code", identifying a branch of industry, the calculation means are arranged in order to carry out a specific algorithmic processing in the Points file at the time of the purchase from a merchant concerned, according to the content of the behaviour fields of the card user at another one or more other merchants concerned having the same "business code".

13. Device according to Claim 12, **characterised in that** it comprises
- means for entering data corresponding to said operation into intermediate data storage and display means,
- means for storing coded information concerning one or more operations,
- means for comparing the data entered in said intermediate memory with information stored in said information storage means,
- means for processing the results of these comparisons,
- and means arranged in order to print a coupon automatically, controlled by said means for processing said results and on the basis of information coming from the content of the memory of said smart card.

14. Device according to any one of Claims 11 to 13 **characterised in that** the algorithmic processing means are programmable remotely.

## Patentansprüche

1. Verfahren zur Verarbeitung von codierten Informationen bei einem Kaufoder Zahlvorgang durch einen Kunden mit einer Chipkarte bei einem Händler, bei dem der Inhalt des Speichers der Chipkarte gelesen und aufgrund der Informationen aus dem Inhalt des Speichers ein Kupon gedruckt oder nicht gedruckt wird,
**dadurch gekennzeichnet,**
**dass** der Speicher der Chipkarte folgendes enthält:
eine erste Identifikationsdatei, bezeichnet mit Kundendatei, die den Inhaber der Karte identifiziert,
eine zweite Buchungsdatei, bezeichnet mit Punktdatei,
und eine dritte Datei, bezeichnet mit Verhaltensdatei, die das Verhalten des Inhabers der Karte bei jedem der betroffenen Händler betrifft, wobei die Verhaltensdatei für jeden betroffenen Händler ein Identifikationsfeld des betroffenen Händlers und mehrere Verhaltensfelder des Benutzers bei dem betroffenen Händler enthält,
**dass** in Abhängigkeit von dem betroffenen Händler eine algorithmische Verarbeitung erfolgt, die während des Vorgangs bei dem betroffenen Händler in Abhängigkeit einerseits von dem Datum des Vorgangs und andererseits von Informationen ermittelt wird, die in einem oder mehreren Verhaltensfeldern des betroffenen Händlers und/oder eines anderen Händlers enthalten sind,
und dann Daten in die Punktdatei und in die Verhaltensdatei geschrieben werden und der Kupon aufgrund des Ergebnisses der algorithmischen Verarbeitung gedruckt wird oder nicht gedruckt wird.

2. Verfahren nach Anspruch 1,
**dadurch gekennzeichnet,**
**dass** die Verhaltensfelder jedes betroffenen Händlers außerdem ein mit "Code-Aktivität" bezeichnetes Register enthalten, das einen Aktivitätssektor identifiziert, dass die spezifische algorithmische Verarbeitung in der Punktdatei während des Kaufs bei einem betroffenen Händler in Abhängigkeit von dem Inhalt der Verhaltensfelder des Benutzers der Karte bei einem anderen oder mehreren anderen betroffenen Händlern mit derselben "Code-Aktivität" erfolgt.

3. Verfahren nach einem der vorangehenden Ansprüche,
**dadurch gekennzeichnet,**
**dass** die algorithmische Verarbeitung einen Inkrementier- oder einen Dekrementier-Schritt der Punktdatei um eine Zahl von ermittelten Punkten bewirkt.

4. Verfahren nach Anspruch 3,
**dadurch gekennzeichnet,**
**dass** ein Kupon nur dann gedruckt wird, wenn die Zahl der in der Punktdatei enthaltenen Punkte größer als ein vorbestimmter Wert ist.

5. Verfahren nach einem der Ansprüche 3 und 4,
**dadurch gekennzeichnet,**
**dass** der Kupon nur dann gedruckt und/oder die Punktdatei nur dann inkrementiert oder dekrementiert wird, wenn die Kundendatei vorbestimmten Kriterien entspricht.

6. Verfahren nach einem der Ansprüche 3 bis 5,
**dadurch gekennzeichnet,**
**dass** die Punktdatei mehr oder weniger in Abhängigkeit von dem Umfang des Kauf- oder Zahlvorgangs inkrementiert wird.

7. Verfahren nach einem der Ansprüche 3 bis 6,
**dadurch gekennzeichnet,**
**dass** die Punktdatei in Abhängigkeit von der Häufigkeit und/oder der Eigenschaft des ersten, zweiten oder x-ten Besuchs des Karteninhabers während einer vorbestimmten Zeitperiode mehr oder weniger inkrementiert wird.

8. Verfahren nach einem der vorangehenden Ansprüche,
**dadurch gekennzeichnet,**
**dass** Informationen eingeführt werden, die dem Betrieb in einem Speicher einer Zahlstelle bei dem betroffenen Händler entsprechen,
**dass** die eingeführten Informationen mit Informationen verglichen werden, die in Speichermitteln gespeichert sind und Reihen von vorbestimmten Operationen entsprechen, und die Ergebnisse dieser Vergleiche für das Drucken eines Kupons und/oder das Schreiben in die Punktdatei verarbeitet werden.

9. Verfahren nach einem der vorangehenden Ansprüche,
**dadurch gekennzeichnet,**
**dass** der Zugang zu den Dateien durch einen mit Dreifach-DES bezeichneten Vorgang verschlüsselt wird.

10. Verfahren nach einem der vorangehenden Ansprüche,
**dadurch gekennzeichnet,**
**dass** die algorithmische Verarbeitung aus der Entfernung programmiert wird.

11. Vorrichtung zur Verarbeitung von codierten Informationen bei einem Kauf- oder Zahlvorgang durch einen Inhaber einer Chipkarte bei einem Händler, enthaltend die Chipkarte, Mittel zum Lesen von in dem Speicher der Chipkarte codierten Daten, Berechnungsmittel und Mittel zum Drucken eines Kupons,
**dadurch gekennzeichnet,**
**dass** der Speicher der Chipkarte eine erste ldentifikationsdatei, mit Kundendatei bezeichnet, die den Inhaber der Karte identifiziert, eine zweite Buchungsdatei, mit Punktdatei bezeichnet, und eine dritte Datei, mit Verhaltensdatei bezeichnet, enthält, die das Verhalten des Karteninhabers bei jedem der betroffenen Händler betrifft, dass die Verhaltensdatei für jeden betroffenen Händler ein Identifikationsfeld des betroffenen Händlers und
mehrere Verhaltensfelder des Benutzers bei dem betroffenen Händler enthält,
**dass** die Berechnungsmittel Mittel zur algorithmischen Verarbeitung enthalten, die in ihrer Funktion einerseits durch das Datum des Vorgangs und andererseits durch Informationen bestimmt sind, die in einem oder mehreren Verhaltensfeldern des betroffenen Händlers und/oder anderer Händler enthalten sind, und Mittel zum Schreiben der Daten in die Punktdatei und in die Verhaltensdatei aufgrund des Ergebnisses der algorithmischen Verarbeitung enthält,
**dass** die Mittel zum Drucken eines Kupons dafür eingerichtet sind, den Kupon aus den Informationen von dem Inhalt der Dateien und der algorithmischen Verarbeitung zu drucken oder nicht zu drucken.

12. Vorrichtung nach Anspruch 11,
**dadurch gekennzeichnet,**
**dass** die Verhaltensfelder jedes betroffenen Händlers außerdem ein mit "Code-Aktivität" bezeichnetes Feld enthalten, das einen Bereich der Aktivität identifiziert, dass die Berechnungsmittel dafür eingerichtet sind, eine spezifische algorithmische Verarbeitung in der Punktdatei bei dem Kauf bei einem betroffenen Händler zu bewirken, in Abhängigkeit von dem Inhalt der Verhaltensfelder des Benutzers der Karte bei einem anderen oder mehreren anderen betroffenen Händlern mit derselben "Code-Aktivität".

13. Vorrichtung nach Anspruch 12, **gekennzeichnet durch**
- Mittel zur Einführung von Daten gemäß dem Vorgang in Zwischen-Speichermittel und Wiedergabe der Daten,
- Mittel zur Speicherung der codierten Informationen, die einen oder mehrere Vorgänge betreffen,
- Mittel zum Vergleich der in dem Zwischenspeicher eingeführten Daten mit den in den Speichermitteln für die Informationen gespeicherten Daten,
- Mittel zur Verarbeitung der Ergebnisse dieser Vergleiche,
- und Mittel zum automatischen Drucken eines Kupons, die **durch** die Mittel zur Verarbeitung der Ergebnisse aus den Informationen von dem Inhalt des Speichers der Chipkarte gesteuert sind.

14. Vorrichtung nach einem der Ansprüche 1 bis 13,
**dadurch gekennzeichnet,**
**dass** die Mittel zur algorithmischen Verarbeitung aus der Entfernung programmierbar sind.
